# EUROPEAN PATENT SPECIFICATION

(11) **EP 2 065 256 B1**
(45) Date of publication and mention of the grant of the patent: **26.01.2011**
(21) Application number: 08170164.1
(22) Date of filing: 27.11.2008
(51) Int. Cl.: B60R 9/045

(54) **A roof bar for a motor vehicle**
Dachstrebe für ein Kraftfahrzeug
Barre de toit pour véhicule à moteur

(30) Priority: 27.11.2007 GB 0723198
(43) Date of publication of application: 03.06.2009
(73) Proprietor: Ford Global Technologies, LLC, Dearborn, MI 48126 (US)
(72) Inventor: Gerhardt, Torsten, London, N22 7UL (GB); Harding, John, Leigh-on-Sea, Essex , SS9 1NG (GB); Flemming, Stephen David, Hockley, Essex, SS5 4SE (GB); Agius, Alicia, Bournemouth, BH11 9UB (GB); Farrelly, William, Chelmsford, Essex, CM2 6HB (GB); Wright, Ian Sutherland, Chelmsford, Essex CM1 2PR (GB); Stanesby, Danny Edward, Benfleet, Essex SS7 3TF (GB)
(74) Representative: Grunfeld, David Peter

(56) References cited:
- DE-A1- 4 018 009
- DE-A1- 19 954 835
- JP-A- 7 257 285

## Description

This invention relates to a motor vehicle and in particular to a roof bar for carrying a load on a roof of the motor vehicle.

It is known to provide a motor vehicle with two or more removable roof bars in order to carry objects on the roof of a motor vehicle such as, for example, a roof box, a ladder, scaffold poles, scaffold planks and long lengths of timber. It is a problem with a removable roof bar that considerable time and effort is required to fit or remove the roof bar from the vehicle.

It is a further problem that such fixed but removable roof bars greatly increase the height of the vehicle when they are fitted and, as such, removable roof bars are not ideal for use on a light commercial vehicle such as a van where it is desirable to keep the height of the vehicle below the height restrictions commonly imposed at car park entrances when no load is to be carried on the roof.

It is an object of this invention to provide a stowable roof bar for a motor vehicle that is quick and easy to deploy or stow and does not significantly increase the overall height of the vehicle when it is stowed.

According to a first aspect of the invention there is provided a stowable roof bar for a motor vehicle comprising an elongate load carrying member extending across the vehicle and being pivotally connected to a roof of the vehicle for movement between stowed and deployed positions and a latch mechanism to selectively hold the elongate load carrying member in the deployed position in which a crossbar portion of the elongate load carrying member is spaced above the roof of the vehicle, as disclosed in document DE-A1-4018009, **characterised in that** the width of the crossbar portion is greater than the thickness of the crossbar portion and the crossbar portion is re-orientated by the movement of the elongate load carrying member from the stowed position to the deployed position so as to increase the vertical resistance to bending of the crossbar portion.

This has the advantage that a thin crossbar portion can be used to reduce the stowed height without compromising the resistance to bending of the crossbar portion when the roof bar is deployed.

The crossbar portion may be orientated such that the width of the crossbar portion is vertically arranged when the elongate load carrying portion is in the deployed position and the thickness of the crossbar portion is vertically arranged when the elongate load carrying portion is in the stowed position.

The thickness of the crossbar portion may be in the range of 15 to 20mm.

The width of the crossbar portion may be in the range of 1.5 to 4.0 times the thickness of the crossbar portion.

The elongate load carrying member may comprise of the crossbar portion and two end portions one fastened to each end of the crossbar portion.

The elongate load carrying member may comprise of the crossbar portion and two end portions one fastened to each end of the crossbar portion and there are two stays each of which is latchable to a respective one of the two end portions by a respective latch mechanism.

The two latch mechanisms may be linked together so that they work in unison so as to facilitate the releasing of the two latch mechanisms from one end of the roof bar.

This has the advantage that the roof bar can be stowed or deployed from one side of the motor vehicle.

Each of the stays may be connected to the corresponding end portion by a control link used to control the motion of the elongate load carrying member and the stay when the roof bar is reversibly moved between its deployed and stowed positions.

The control link may have a respective U-shaped end portion at each end, each of the U-shaped end portions may have a first arm pivotally engaged with a respective end portion and a second arm pivotally connected to the respective stay on the same end of the roof bar.

When the latching means are released, each control link may form in combination with the respective end portion, the respective stay and a respective base plate, a four bar linkage.

The roof bar may further comprise a pair of base plates for fastening the roof bar to the roof of the vehicle, each of the base plates having a respective stay pivotally connected to it near to one end and a respective end portion pivotally connected to it near to an opposite end.

Each of the end portions may be moulded from a plastic material and may have a spigot extending therefrom, the crossbar is a tubular member having a bore shaped and sized to fit the spigots and the two end portions are fastened to the crossbar by means of the spigots.

Each end portion may have at least one large aperture formed therein for securing a load to the roof bar.

Each control link may have a detent forming part of a corresponding latch mechanism attached thereto and the control link may be transversely moveable so as to disengage the detent from an aperture in a wall of a corresponding stay so as to release the latch mechanism.

Each control link may be fastened at one end to a rod used to link the two latch mechanisms and is pivotally connected at an opposite end to one of the two stays, wherein a longitudinal displacement of the rod by a user of the vehicle is operable to simultaneously release both latch mechanisms and rotational movement of the rod facilitates folding of the roof bar.

The roof bar may be arranged to fold such that the end portions of the elongate load carrying member fold over onto the stays without increasing the stacked height of the stowed roof bar.

Each end portion may be U-shaped in cross-section and may define an internal volume in which a respective stay is stowed when the roof bar is in the stowed state.

The roof of the motor vehicle may have a high point and a low point and, when the roof bar is moved to its stowed state, no part of the stowed roof bar may be located higher than the high point of the roof so that the overall height of the motor vehicle is not increased by the stowed roof bar and no part of the roof bar may be located lower than the low point on the roof.

The roof bar may further comprise a pair of base plates to pivotally connect the elongate load carrying member to a roof of the motor vehicle, a pair of stays each pivotally connected to the roof of the vehicle by a respective one of the two base plates, the latch mechanism being arranged to selectively latch the stays to the elongate load carrying member so as to hold the elongate load carrying member in the deployed position wherein the thickness of the elongate load carrying member, the base plates and the stays are such that, when the latch mechanism is released so as to permit the roof bar to be moved to the stowed position in which the elongate load carrying member and the stays are folded flat on the roof of the vehicle, the highest point of the stowed roof bar is no higher than a high point on the roof of the motor vehicle so that the overall height of the vehicle is not increased and no part of the roof bar is located lower than a low point of the roof.

According to a second aspect of the invention there is provided a motor vehicle having a roof and at least two roof bars constructed in accordance with said first aspect of the invention attached to the roof of the motor vehicle in a spaced apart relationship.

The roof of the motor vehicle has a high point and, when the roof bars fitted to the roof of the vehicle are moved to their respective stowed states, no part of the stowed roof bars may be located higher than the high point of the roof so that the overall height of the motor vehicle is not increased by the stowed roof bars and the roof has a low point corresponding to a height below which a surface is not self draining and no part of each roof bar may be stowed lower than the low point of the roof.

The roof may have a convex central portion bounded on each side by a longitudinally extending drainage ditch and the low point of the roof may correspond to the height of the drainage ditches and the central portion of the roof may have a number of open ended channels formed in it to accommodate the stowed roof bars, each of the channels having a base surface located no lower than the height of the drainage ditches so as to ensure that it is self draining and each roof bar is stowed in a respective one of the channels.

The invention will now be described by way of example with reference to the accompanying drawing of which:-
Fig.1 is a side view of a motor vehicle according to the invention;
Fig.2 is rear view of the motor vehicle shown in Fig.1;
Fig.3a is a pictorial schematic view of a roof of the vehicle shown in Figs.1 and 2 showing two transverse open ended channels and a roof bar according to the invention in deployed and stowed states;
Fig.3b is a pictorial view of the right hand side of the roof shown in Fig.3 but with no roof bars in place;
Fig.4a is a scrap transverse cross sectional view of the roof shown in Fig.3b in which the dimensions and curvature have been greatly exaggerated;
Fig.4b is a view similar to that of Fig.4a showing a possible stowage volume for a roof bar according to the invention;
Fig.5 is a pictorial view of a right hand end portion of the roof bar shown schematically on Fig.3a in the deployed state;
Fig.6 is a reversed pictorial view of the roof bar shown in Fig.5;
Fig.7 is a pictorial view similar to that of Fig.6 but showing the roof bar in a stowed state;
Fig.8 is a scrap cross-section through a latch mechanism used to hold the roof bar in the deployed state;
Fig.9 is a pictorial schematic view showing the interlinking of two latch mechanisms and the location of a control link used to control the folding motion of the roof bar as it would appear if removed from the roof bar;
Fig.10 is a pictorial view similar to that of Fig.6 but showing a second embodiment of roof bar according to the invention;
Fig.11 is a pictorial view similar to that of Fig.10 but with a stay member cut away to show a latch mechanism when the roof bar is in the deployed state;
Fig.12 is a view similar to that of Fig.10 but showing the arrangement of components when the roof bar is partially stowed;
Fig.13 is a pictorial view of the roof bar shown in Figs.10 to 12 when in the stowed state;
Figs.14a to 14c are scrap cross-sections showing the relative positions of a control link when the roof bar is in the positions shown in Figs.10, 12 and 13;
Fig.15a is a scrap cross-section through a crossbar portion of the roof bar showing the orientation of the crossbar portion when the roof bar is in the stowed position; and
Fig.15b is a scrap cross-section of the crossbar portion shown in Fig.15a showing the orientation of the crossbar portion when the roof bar is deployed.

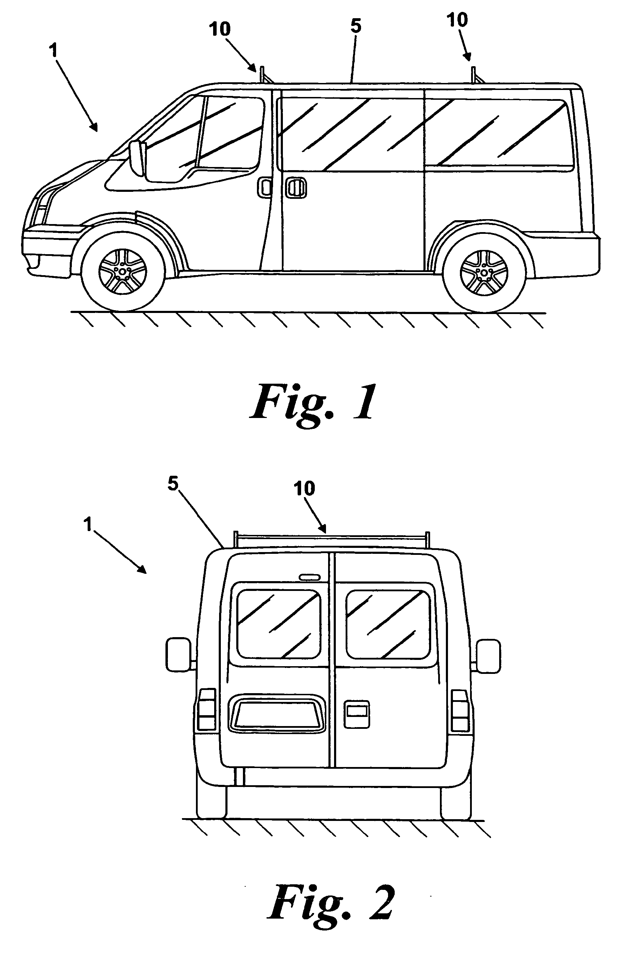

With particular reference to Figs 1 to 4b there is shown a motor vehicle 1 having a roof 5 upon which is mounted two spaced apart identical stowable roof bars 10.

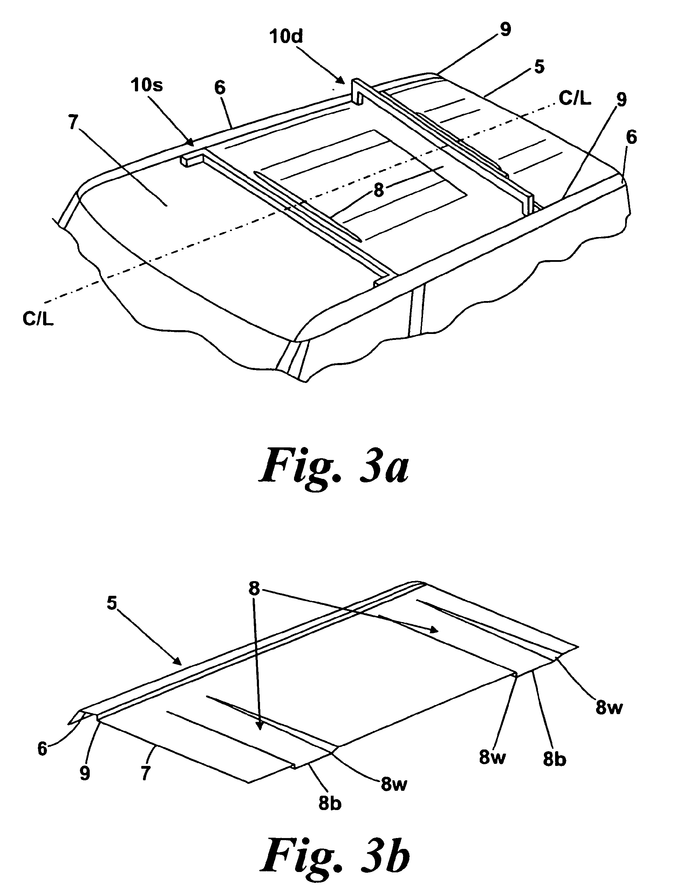

Each of the roof bars 10 is reversibly moveable between a stowed state, indicated by the reference numeral 10s on Fig.3, to a deployed state, indicated by the reference numeral 10d on Fig.3, where it is retainable by a latch mechanism.

In Figs.1 to 3a the motor vehicle is in the form of a van 1 and is shown with two roof bars 10 fitted to its roof 5 but it will be appreciated that more than two roof bars 10 could be fitted to the roof 5.

The roof 5 comprises of a convex central portion 7 bounded on each longitudinal side by a drainage ditch 9, two channels 8 each having sides surfaces 8w and a base surface 8b and a ridge 6 running longitudinally along both outer edges of the roof 5.

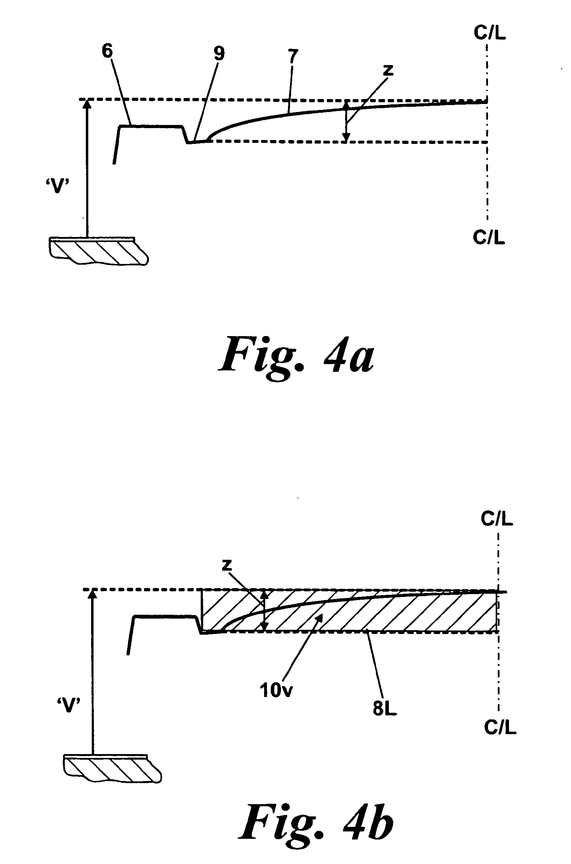

Referring now to Figs.4a and 4b the central roof portion 7 has a high point or crown located on the centre line C/L of the motor vehicle 1 and, in this case, this is also the highest point of the vehicle 1 and so defines the overall height 'V' of the vehicle 1. It will however be appreciated that with some roof forms the height of the ridges 6 may determine the overall height of the vehicle 1.

In the case where the high point is determined by the height of the ridges 6, there will be a difference in height between the high point of the central roof portion 7 and the highest point of the vehicle 1 and this difference in height may be sufficient in some case to package a stowed roof bar in accordance with this invention. However, in most cases, this difference will not be sufficient to permit a stowed roof bar to be stowed without increasing the vehicle height.

If, as shown, the ridges 6 are lower than the overall height 'V' of the vehicle as determined by the high point of the central roof portion 7 a number of the channels 8 must be formed in the central roof portion 7 so as to provide sufficient volume in which to stow each roof bar 10 so that, when the roof bars 10 fitted to the roof of the vehicle 1 are moved to their respective stowed states, no part of the stowed roof bars 1 is located higher than the high point of the roof 5 so that the overall height 'V' of the vehicle 1 is not increased by the stowed roof bars 10. Such channels could also be used even if the high point is the ridges to provide an increased volume for stowing the roof bar 10.

The roof 5 has a low point corresponding to a height below which a surface is not self draining and each roof bar 10 must be stowed on a surface that is no lower than the low point of the roof 5 so that the surface is self draining and to reduce drag, wind noise and improve the aesthetic appearance of the vehicle.

As the low point of the roof 5 corresponds to the height of the drainage ditches 9, each of the channels 8 must have a base surface 8b located no lower than the height of the drainage ditches 9 so as to ensure that the channels 8 are self draining.

In Figs.4a and 4b the dimension z represents the vertical height between the level of the drainage ditches 9 and the high point of the roof 5 and it is this space that can be utilised by incorporating the channels 8 into the roof 5 to stow a roof bar 10. Fig.4b shows as a shaded area 10v the volume that can be occupied by a stowed roof bar 10 without increasing the overall height 'V' of the vehicle 1. The line 8L corresponds to the minimum height of the base surface 8b that must be maintained if the corresponding channel 8 is to be self draining.

Therefore although a roof bar formed in accordance with this invention can be used on many types of roof depending upon their respective configuration and is not limited to a roof having the profile shown, it is desirable for the roof 5 to have a number of open ended channels 8 because these can be used to assist with stowage of the roof bars 10 by providing an additional stowage volume.

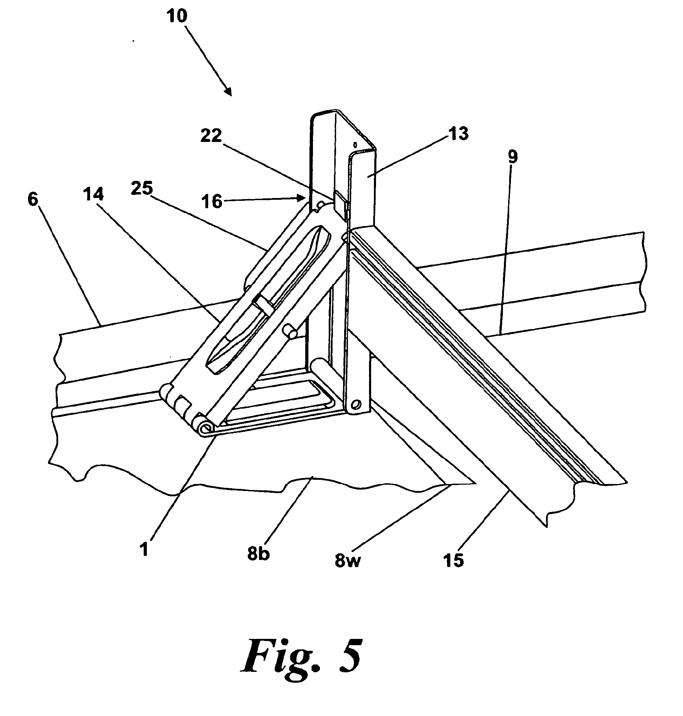

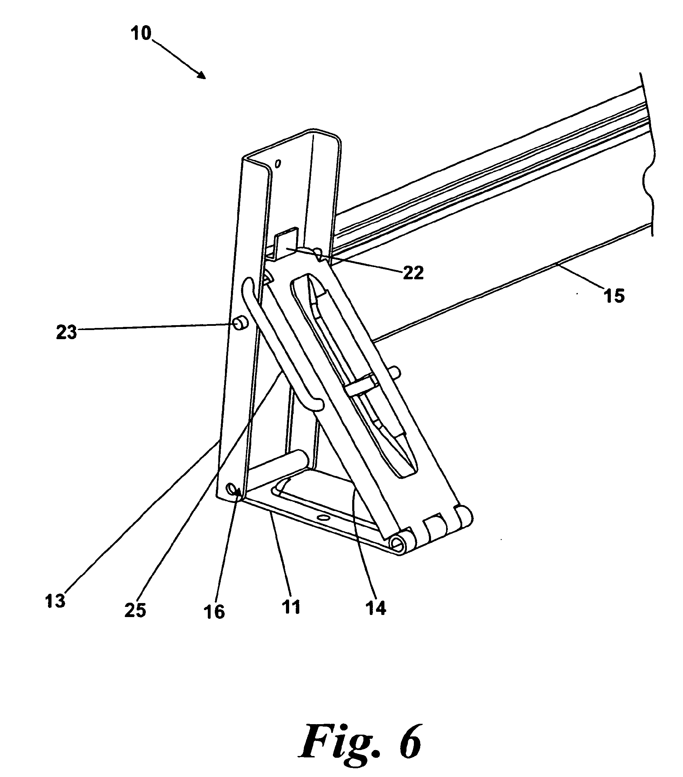

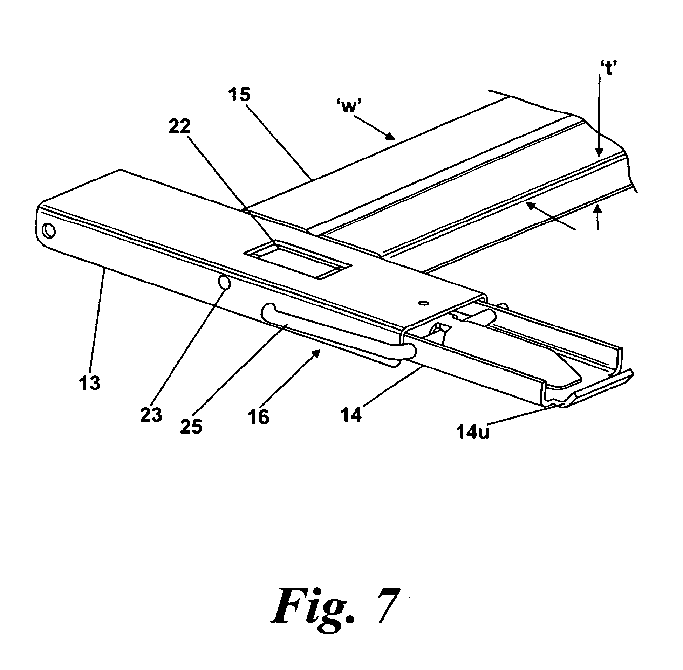

With reference to Figs. 5 to 9 there is shown a first embodiment of a roof bar according to the invention.

The roof bar 10 comprises an elongate load carrying member 13 pivotally connected to the roof 5 of the vehicle 1 so as to extend across the vehicle 1, two stays 14 pivotally connected to the roof 5 of the vehicle 1 and a latch mechanism 20 to selectively latch each stay 14 to the elongate load carrying member 13 so as to hold the elongate load carrying member 13 in a deployed state in which a crossbar portion 15 of the elongate load carrying member 13 is spaced above the roof 5 of the vehicle 1.

The elongate load carrying member 13 is H-shaped and comprises of the crossbar portion 15 and two end portions 16, one fastened to each end of the crossbar portion 15.

The end portions 16 are used to space the crossbar 15 above the roof 5 when the roof bar 10 is in the deployed state and provide end stops for the crossbar 15 so as to prevent an item secured to the roof bar 10 from sliding off either end of the crossbar 15.

The cross-bar 15 is formed in this case from a rectangular tube that is wide relative to its thickness so that, when the crossbar portion 15 is in the deployed state, the crossbar 15 is able to support a load fastened to the roof bar 10 but, when the roof bar 10 is stowed, the thickness of the crossbar 15 is such that the overall height of the vehicle 1 is not increased by the stowed roof bar 10.

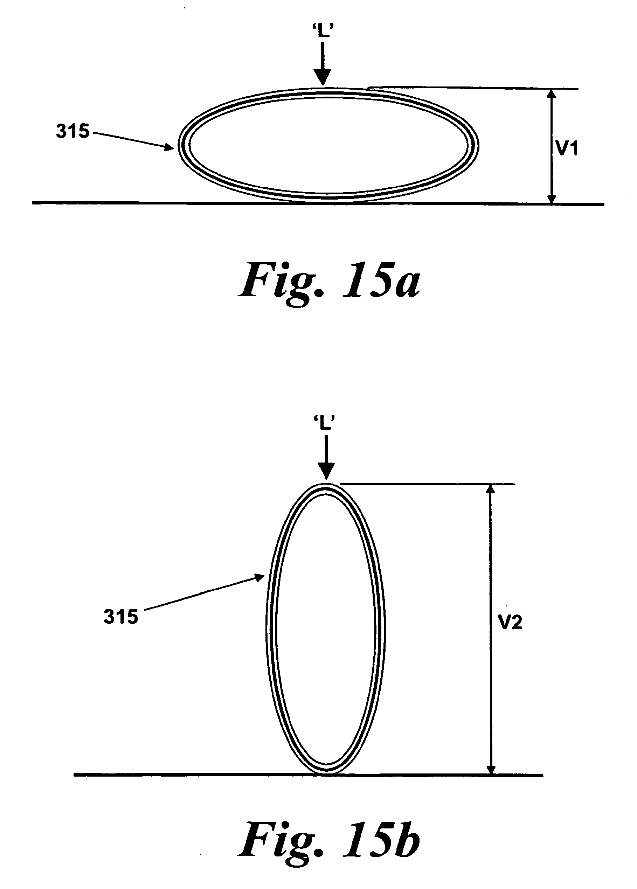

The asymmetric shape of the cross bar portion 15 in combination with the fact that the crossbar portion 15 is re-orientated when the elongate load carrying member is moved between the stowed and deployed positions is a significant feature of this invention. Figs. 15a and 15b show a cross section through a crossbar portion that is asymmetric being in this case oval. That is to say the width 'V2' of the crossbar portion is significantly greater than the thickness 'V1' and the width 'V2' may be in the order of 1.5 to 4 times the thickness 'V1'. Figs. 15a and 15b show the effect of the re-orientation of the crossbar portion due to the movement of the elongate load carrying member 13 from the stowed position indicated in Fig.15a and deployed position indicated in Fig.15b. It will be appreciated that when the elongate load carrying member 13 is in the stowed position the crossbar portion has a low resistance to bending if a vertical load 'L' is applied, due to its relatively low second moment of area, but is vertically thin (circa 15 to 20mm) and so will have very little impact on the height of the motor vehicle 1. Whereas when the elongate load carrying member 13 is in the deployed position the crossbar portion has a high resistance to bending if the vertical load 'L' is applied. This is due to the fact that the second moment of area is increased in relation to a vertical load when the crossbar portion is re-orientated by the movement of the elongate load carrying member 13 to the deployed position.

The crossbar portion 15 is orientated such that the width 'w' of the crossbar portion 15 is vertically arranged when the elongate load carrying portion 13 is in the deployed position and the thickness 't' of crossbar portion 15 is vertically arranged when the elongate load carrying portion 13 is in the stowed position.

It will be appreciated that other shapes could be used for the crossbar portion and that the crossbar portion need not be rectangular or oval in cross-section. What is required is a crossbar portion that is thin in one direction so as to have minimal impact on vehicle height when the elongate load carrying member is stowed and wide in another direction so as to have a relatively high second moment of area when the wide dimension is arranged in the deployed position.

Each of the end portions 16 is formed from a U-shaped channel member. The end portions 16 are fastened at opposite ends of the crossbar 15 so as to form the H-shaped elongate load carrying member 13.

The roof bar 10 further comprises of a pair of base plates 11 which are used to fasten the roof bar 10 to the roof 5 of the vehicle 1. Each of the base plates 11 has one of the two stays 14 pivotally connected to it near to one end and a corresponding end portion 16 pivotally connected to it near to an opposite end.

The width and thickness of the end portions 16 is such that they can be folded down so as to overlie the corresponding stay 14 and base plate 11 when the roof bar 10 is moved to the stowed position. That is to say, the end portions 16 define an internal volume in which the stays 14 are at least partially contained when the roof bar 10 is in the stowed state.

The height of the stowed roof bar 10 is therefore determined by the largest of the thickness of the end portions 16 of the roof bar 10 and the thickness of the crossbar portion 15. In most cases this dimension can be made as small as 15 to 20 mm without sacrificing the mechanical integrity of the roof bar 10.

As shown in Fig.5, the base plates 11 are secured in the drainage ditches 9 of the roof 5 and, when stowed, the crossbar 15 rests upon the lower surface 8b of one of the channels 8. However, it will be appreciated that the roof bar 10 could be fastened to the roof 5 so that it lies entirely within one of the channels 8 or if there are no channels directly to any convenient location on the roof 5.

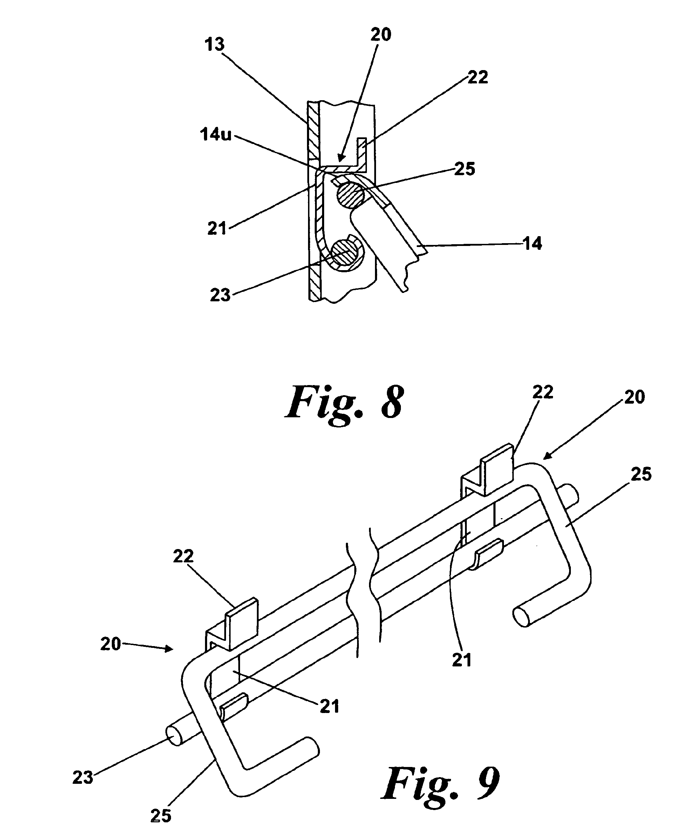

Each of the two stays 14 is latchable to a respective one of the two end portions 16 by a respective latch mechanism 20. As best seen in Figs.8 and 9 each latch mechanism comprises of a latch arm 21 fastened at one end to a rod 23 that extends across the roof bar 10 so as to link together the two latch mechanisms 20. The latch arm 21 has a stepped end 22 which, when the latch mechanism 20 is engaged, overlies a turned over end portion 14u of the corresponding stay 14 so as to trap the stay 14 between the latch arm 21 and a control rod 25 pivotally connected to the stay 14. If the stepped end 22 is pressed by a user of the vehicle 1 the latch arm 21 will rotate the rod 23 and move away from the turned over end 14u of the stay 14 thereby releasing the stay 14 and allowing the roof bar 10 to be folded from the deployed state to the stowed state. The rod 23 will also release the latch mechanism 20 on the other end of the roof bar 10 and so the rod 23 ensures that the two latch mechanisms 20 work in unison and can be operated from either side of the vehicle 1. It is an advantage of the invention that the latch mechanism 20 holding the stays 14 can be released from one end of the roof bar 10 as this provides increased ease of use and eliminates the need for two operatives to deploy or stow the roof bar 10.

Each of the stays 14 is connected to the corresponding end portion 16 by the control rod 25. The control rod 25 is pivotally connected at one end to a respective end portion 16 and is pivotally connected at an opposite end to the respective stay 14 on the same end of the roof bar 10 and is U-shaped at each end. The U-shaped end portions each have first arm pivotally engaged with a respective end portion 16 and a second arm pivotally connected to the respective stay 14 on the same end of the roof bar 10.

When the latching means 20 is released, the control rod 25 forms in combination with the respective end portions 16, stays 14 and base plates 11 a four bar linkage which is used to control the motion of the elongate load carrying member 13 and the stays 14 when the roof bar 10 is reversibly moved between its deployed and stowed positions.

In operation the roof bar 10 can be moved from its deployed position, in which an upper surface of the cross bar 15 is positioned approximately 100 to 200 mm above the adjacent central roof portion 7, to the stowed state, in which it is folded flat on the roof 5, by simply releasing one of the latch mechanisms 20 and pushing or pulling the elongate load carrying member 13 to its stowed position. To reverse the procedure the elongate load carrying member 13 is merely lifted from its stowed position until the latch mechanisms 20 are re-engaged.

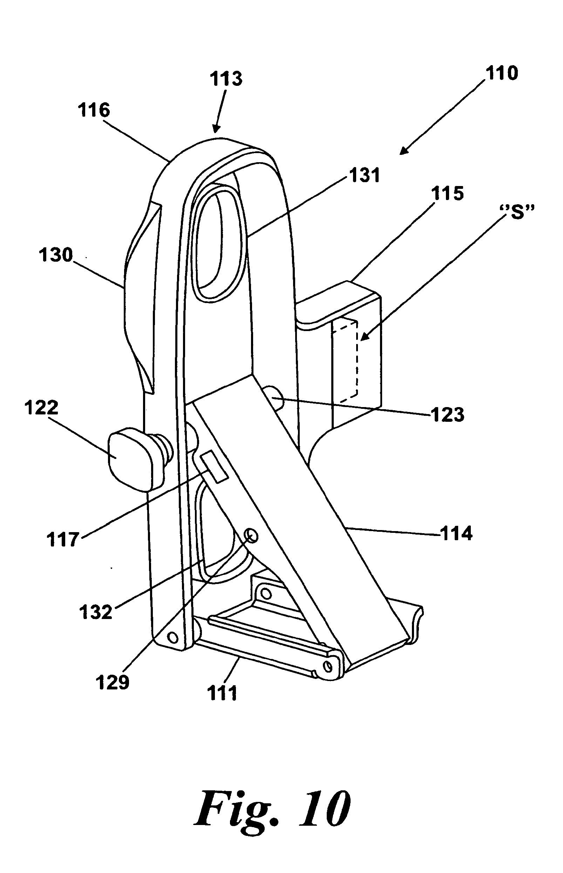

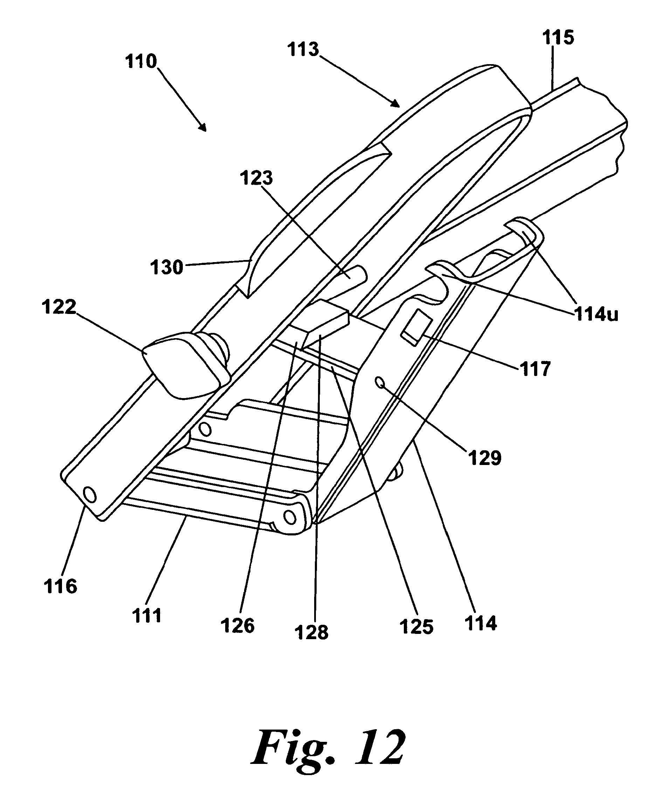

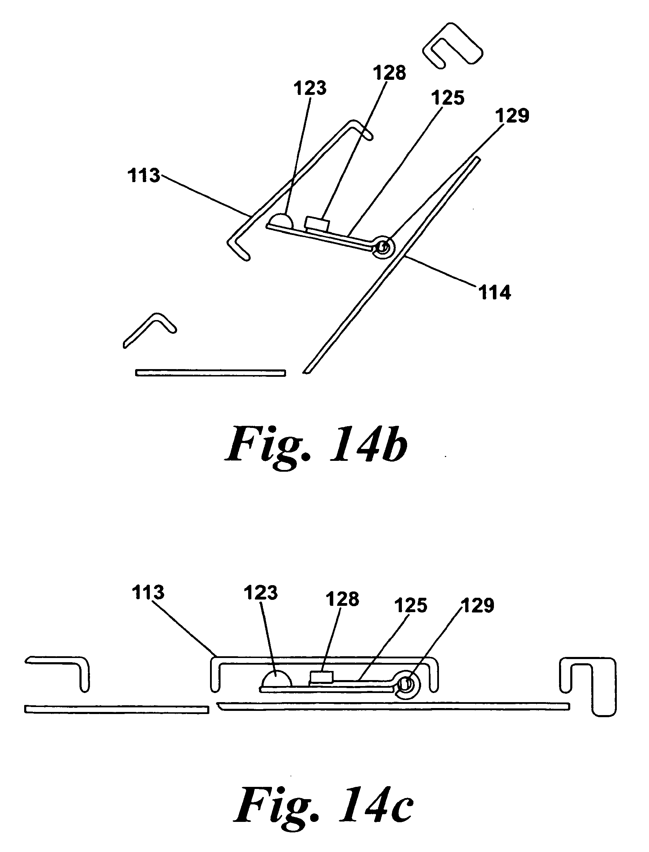

With reference to Figs.10 to 14c there is shown a second preferred embodiment of roof bar 110 according to the invention which is intended to be a direct replacement for the roof bar 10 previously described.

The roof bar 110 comprises an elongate load carrying member 113 pivotally connected to the roof 5 of the vehicle 1 so as to extend across the vehicle 1, two stays 114 pivotally connected to the roof 5 of the vehicle 1 and a latch mechanism to selectively latch each stay 114 to the elongate load carrying member 113 so as to hold the elongate load carrying member 113 in a deployed state in which a crossbar portion 115 of the elongate load carrying member 113 is spaced above the roof 5 of the vehicle 1.

The elongate load carrying member 113 is H-shaped and comprises of the crossbar portion 115 and two end portions 116, one fastened to each end of the crossbar portion 115.

The end portions 116 are used to space the crossbar 115 above the roof 5 when the roof bar 110 is in the deployed state and provide end stops for the crossbar 115 so as to prevent an item secured to the roof bar 110 from sliding off either end of the crossbar 115.

The crossbar 115 is formed from a rectangular extruded aluminium tube that is wide relative to its thickness so that, when the crossbar 115 is in the deployed state, the crossbar 115 is able to support a load fastened to the roof bar 10 but, when the roof bar 110 is stowed, the thickness of the crossbar 115 is such that the overall height of the vehicle 1 is not significantly increased by the stowed roof bar 110.

As before the crossbar portion is asymmetric in shape having a width 'w' that is significantly greater than its thickness 't'. The width 'w' may for example be in the range of 1.5 to 4.0 times greater that the thickness 't'. The thickness may be in the range of 15 to 20mm. As before the crossbar portion 115 is re-orientated by the movement of the elongate load carrying member 113 from the stowed to the deployed position so as to provide an increased resistance to vertically applied bending loads.

The crossbar portion 115 is orientated such that the width 'w' of the crossbar portion 115 is vertically arranged when the elongate load carrying portion 113 is in the deployed position and the thickness 't' of crossbar portion 115 is vertically arranged when the elongate load carrying portion 113 is in the stowed position.

Each of the end portions 116 is formed from a U-shaped channel member that is closed at one end to increase its strength. The end portions 116 are fastened at opposite ends of the crossbar 115 so as to form the H-shaped elongate load carrying member 113.

Each of the end portions 116 is moulded from a plastic material and has a spigot "S" (shown as a broken line only on Fig.10) extending therefrom. The crossbar 115 has a bore shaped and sized to fit the spigots "S" and the two end portions 116 are fastened to the crossbar 115 by means of the spigots "S" by, in this case, adhesive bonding.

Each end portion 116 also has a grip handle 130 formed as an integral part to assist with moving the roof bar 110 between its deployed and stowed states and two large apertures 131, 132 formed therein for securing a load to the roof bar 110 when the roof bar 110 is in use.

The roof bar 110 further comprises of a pair of base plates 111 which are used to fasten the roof bar 110 to the roof 5 of the vehicle 1. Each of the base plates 111 has one of the two stays 114 pivotally connected to it near to one end and a corresponding end portion 116 pivotally connected to it near to an opposite end.

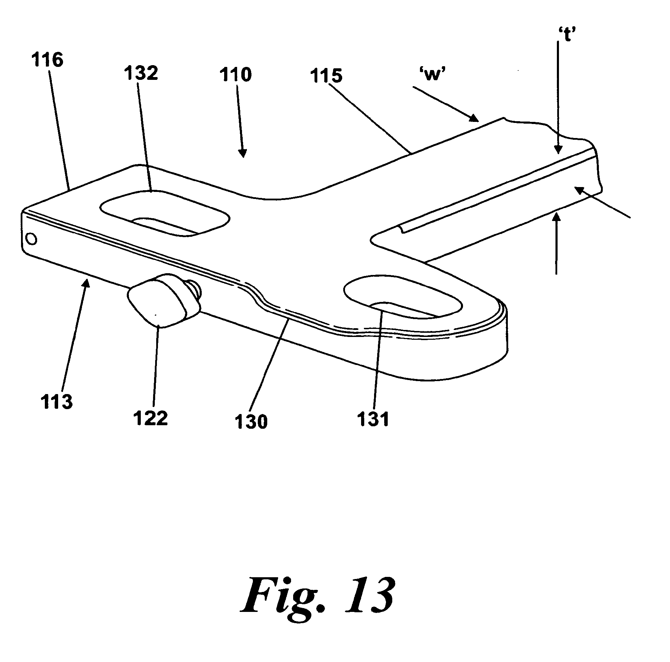

The width and thickness of the end portions 116 is such that they can be folded down so as to overlie the corresponding stay 114 and base plate 111 when the roof bar 110 is moved to the stowed position. That is to say, the end portions 116 define an internal volume in which the stays 114 are contained when the roof bar 110 is in the stowed state and, as shown in Fig.13, the end portions 116 overlie the corresponding stay 114 and base plate 111 when the roof bar 110 is in the stowed state so as to totally obscure these parts 111, 114 from view. This considerably improves the aesthetic appeal of the stowed roof bar 110.

The height of the stowed roof bar 110 is therefore determined by the greatest of the thickness of the end portions 116 of the roof bar 110 and the thickness of the crossbar portion 115. Although the thickness of these parts 115, 116 will be determined to some extent by the application, in most cases it is possible to use a thickness of between 15 and 20 mm without sacrificing the mechanical integrity of the roof bar 110.

The base plates 111 may be secured in the drainage ditches 9 of the roof 5 and, when stowed, the crossbar 115 may rest upon the lower surface 8b of one of the channels 8 if such channels 8 are provided. However, it will be appreciated that the roof bar 110 could be fastened to the roof 5 so that it lies entirely within one of the channels 8 or if there are no channels 8 directly to any convenient location on the roof 5.

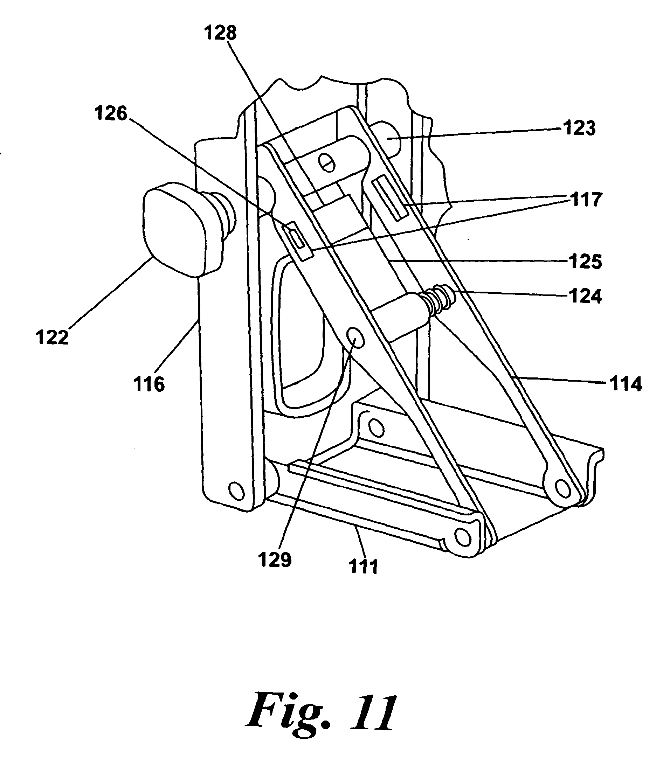

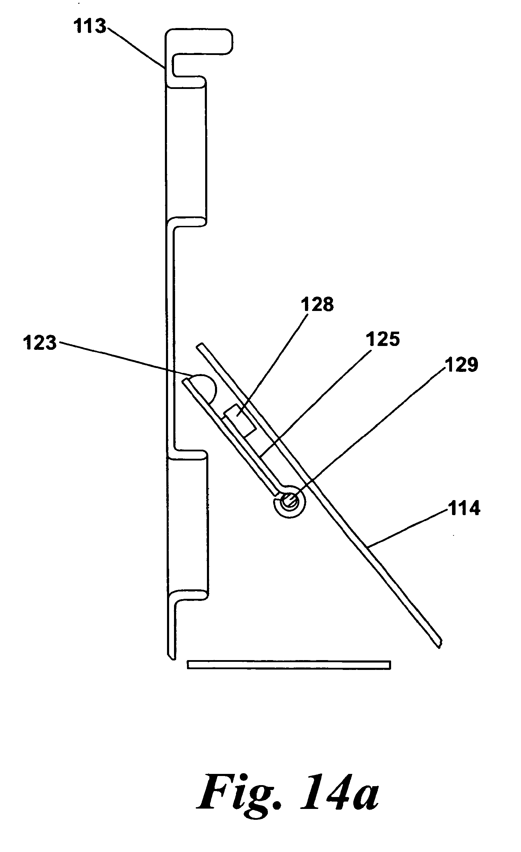

Each of the two stays 114 is latchable to a respective one of the two end portions 116 by a respective latch mechanism, best seen in Figs. 11, 12 and 14a to 14c.

Each latch mechanism comprises of a control link in the form of a latch arm 125 fastened at one end to a transfer rod 123 that extends across the roof bar 110 so as to link together the two latch mechanisms. Each latch arm 125 is pivotally connected at an opposite end to the end where it is fastened to the transfer rod 123 to a corresponding stay 114 by means of a pivot pin 129. The transfer rod 123 is "D" shaped in the region of each end portion 116 so as to provide a flat surface to which each latch arm 125 can be fastened.

When the latch mechanism is released, the latch arm 125 forms in combination with the respective end portion 116, the respective stay 114 and the respective base plate 111 a four bar linkage that controls the movement of the roof bar 110 as it transitions between its stowed and deployed states.

The latch arm 125 has a latch member 128 fastened to it for engagement with an aperture 117 formed in a side wall of the corresponding stay 114. A chamfered end portion 126 of the latch member 128 forms a detent that is selectively engageable with the aperture 117 so as to latch the stay 114 to the end portion 116 thereby holding the roof bar 110 in the deployed state.

A spring 124 is used to bias the chamfered end portion 126 into the aperture 117 so that the latch mechanism automatically latches whenever the stay 114 and the end portion 116 are moved to the deployed state. The latch arm 125 is transversely moveable within the corresponding stay 114 so as to allow the chamfered end portion 126 to be disengaged from the aperture 117 in the wall of a corresponding stay 114 to release the latch mechanism.

Each of the stays 114 has two hooked ends 114u which hook over the transfer rod 123 to improve the mechanical integrity of the latch mechanism when the latch mechanism is engaged.

A user input device in the form of a knob 122 is fastened to each end of the transfer rod 123 so as to facilitate operation of the latch mechanism. This has the advantage that the roof bar 110 can be stowed or deployed from one end of the roof bar 110 providing increased ease of use and eliminating the need for two operatives to deploy or stow the roof bar 110.

Because the latch arms 125 at both ends of the roof bar 110 are both connected to the common transfer rod 123 and to one of the two stays 114, a longitudinal displacement of the transfer rod 123 (that is to say, sliding the transfer rod 123 transversely with respect to the vehicle 1) by pushing the knob 122 on one side of the vehicle 1 or pulling the knob 122 on the other side of the vehicle 1 will simultaneously release both latch mechanisms thereby allowing the roof bar 110 to be subsequently folded from the deployed to the stowed state.

In addition, during the transition between the deployed and stowed states, rotational movement of the transfer rod 123 by means of one of the knobs 122 can be used to assist with or facilitate folding of the roof bar 110.

In operation, the roof bar 110 can be moved from its deployed position, in which an upper surface of the crossbar 115 is positioned approximately 100 to 200 mm above the adjacent central roof portion 7, of the motor vehicle 1 to the stowed state, in which it is folded flat on the roof 5, by simply releasing the latch mechanisms using one of the knobs 122 and rotating one of the knobs 122 while pushing or pulling on the elongate load carrying member 113 to move it to its stowed position. To reverse the procedure the elongate load carrying member 113 can be lifted from its stowed position using, if necessary, the grip handle 130 and rotating one of the knobs 122 until the latch mechanisms on both ends of the roof bar 110 re-engage.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A stowable roof bar (10, 110) for a motor vehicle (1) comprising an elongate load carrying member (13, 113) extending across the vehicle (1) and being pivotally connected to a roof (5) of the vehicle (1) for movement between stowed and deployed positions and a latch mechanism (20, 120) to selectively hold the elongate load carrying member (13, 113) in the deployed position in which a crossbar portion (15, 115) of the elongate load carrying member (13, 113) is spaced above the roof (5) of the vehicle (1) **characterised in that** the width (w) of the crossbar portion (15, 115) is greater than the thickness (t) of the crossbar portion (15, 115) and the crossbar portion (15, 115) is re-orientated by the movement of the elongate load carrying member (13, 113) from the stowed position to the deployed position so as to increase the vertical resistance to bending of the crossbar portion (15, 115).

2. A stowable roof bar as claimed in claim 1 wherein the crossbar portion (15, 115) is orientated such that the width (w) of the crossbar portion (15, 115) is vertically arranged when the elongate load carrying portion (13, 113) is in the deployed position and the thickness (t) of the crossbar portion (15, 115) is vertically arranged when the elongate load carrying portion (13, 113) is in the stowed position.

3. A roof bar as claimed in claim 1 or in claim 2 wherein the elongate load carrying member (13, 113) comprises of the crossbar portion (15, 115) and two end portions (16, 116) one fastened to each end of the crossbar portion (15, 115) and there are two stays (14, 114) each of which is latchable to a respective one of the two end portions (16, 116) by a respective latch mechanism (20, 120).

4. A roof bar as claimed in claim 3 wherein the two latch mechanisms (20, 120) are linked together so that they work in unison so as to facilitate the releasing of the two latch mechanisms (20, 120) from one end of the roof bar (10, 110).

5. A roof bar as claimed in claim 3 or in claim 4 wherein each of the stays (14, 114) is connected to the corresponding end portion (16, 116) by a control link (25, 125) used to control the motion of the elongate load carrying member (13, 113) and the stay (14, 114) when the roof bar (10, 110) is reversibly moved between its deployed and stowed positions.

6. A roof bar as claimed in claim 5 in which the control link (25) has a respective U-shaped end portion at each end, each of the U-shaped end portions having a first arm pivotally engaged with a respective end portion (16) and a second arm pivotally connected to the respective stay (14) on the same end of the roof bar (10).

7. A roof bar as claimed in claim 5 or in claim 6 wherein, when the latching means (20, 120) are released, each control link (25, 125) forms in combination with the respective end portion (16, 116), the respective stay (14, 114) and a respective base plate (11, 111) a four bar linkage.

8. A roof bar as claimed in any of claims 5 to 7 wherein each control link (125) has a detent (126) forming part of a corresponding latch mechanism (128) attached thereto and the control link (125) is transversely moveable so as to disengage the detent (126) from an aperture (117) in a wall of a corresponding stay (114) so as to release the latch mechanism (120).

9. A roof bar as claimed in claim 8 in which each control link (125) is fastened at one end to a rod (123) used to link the two latch mechanisms (120) and is pivotally connected at an opposite end to one of the two stays (114), wherein a longitudinal displacement of the rod (123) by a user of the vehicle (1) is operable to simultaneously release both latch mechanisms (120) and rotational movement of the rod (123) facilitates folding of the roof bar (110).

10. A roof bar as claimed in any of claims 3 to 9 wherein the roof bar (10, 110) is arranged to fold such that the end portions (16, 116) of the elongate load carrying member (13, 113) fold over onto the stays (14, 114) without increasing the stacked height of the stowed roof bar (10, 110).

11. A roof bar as claimed in any of claims 3 to 10 wherein each end portion (116) is U-shaped in cross-section and defines an internal volume in which a respective stay (114) is stowed when the roof bar (110) is in the stowed state.

12. A roof bar as claimed in any of claims 1 to 11 wherein the roof (5) of the motor vehicle (1) has a high point and a low point and, when the roof bar (10, 110) is moved to its stowed state, no part of the stowed roof bar (10, 110) is located higher than the high point of the roof (5) so that the overall height of the motor vehicle (1) is not increased by the stowed roof bar (10, 110) and no part of the roof bar (10, 110) is located lower than the low point on the roof (5).

13. A motor vehicle (1) having a roof (5) and at least two roof bars (10, 110) as claimed in any of claims 1 to 12 attached to the roof (5) of the motor vehicle (1) in a spaced apart relationship.

14. A motor vehicle as claimed in claim 13 wherein the roof (5) of the motor vehicle (1) has a high point and, when the roof bars (10, 110) fitted to the roof (5) of the vehicle (1) are moved to their respective stowed states, no part of the stowed roof bars (10, 110) is located higher than the high point of the roof (5) so that the overall height of the motor vehicle (1) is not increased by the stowed roof bars (10, 110) and the roof (5) has a low point corresponding to a height below which a surface is not self draining and no part of each roof bar (10, 110) is stowed lower than the low point of the roof (5).

15. A motor vehicle as claimed in claim 13 wherein the roof has a convex central portion (7) bounded on each side by a longitudinally extending drainage ditch (9) and the low point of the roof (5) corresponds to the height of the drainage ditches (9) and the central portion (7) of the roof (5) has a number of open ended channels (8) formed in it to accommodate the stowed roof bars, each of the channels (8) having a base surface (8b) located no lower than the height of the drainage ditches (9) so as to ensure that it is self draining and each roof bar (10, 110) is stowed in a respective one of the channels (8).

## Patentansprüche

1. Verstaubare Dachstrebe (10, 110) für ein Kraftfahrzeug (1), die ein lang gestrecktes Lasttrageelement (13, 113) enthält, das sich über das Fahrzeug (1) erstreckt und mit einem Dach (5) des Fahrzeugs (1) schwenkbar verbunden ist, um sich zwischen einer verstauten Position und einer ausgeklappten Position zu bewegen, und einen Verriegelungsmechanismus (20, 120) enthält, um das lang gestreckte Lasttrageelement (13, 113) wahlweise in der ausgeklappten Position zu halten, in der ein Querstrebenabschnitt (15, 115) des lang gestreckten Lasttrageelements (13, 113) über dem Dach (5) des Fahrzeugs (1) beabstandet ist, **dadurch gekennzeichnet, dass** die Breite (w) des Querstrebenabschnitts (15, 115) größer ist als die Dicke (t) des Querstrebenabschnitts (15, 115) und dass der Querstrebenabschnitt (15, 115) durch die Bewegung des lang gestreckten Lasttrageelements (13, 113) aus der verstauten Position in die ausgeklappte Position umorientiert wird, um den vertikalen Widerstand gegenüber einem Durchbiegen des Querstrebenabschnitts (15, 115) zu erhöhen.

2. Verstaubare Dachstrebe nach Anspruch 1, wobei der Querstrebenabschnitt (15, 115) so orientiert ist, dass die Breite (w) des Querstrebenabschnitts (15, 115) vertikal angeordnet ist, wenn sich der lang gestreckte Lasttrageabschnitt (13, 113) in der ausgeklappten Position befindet, und die Dicke (t) des Querstrebenabschnitts (15, 115) vertikal angeordnet ist, wenn sich der lang gestreckte Lasttrageabschnitt (13, 113) in der verstauten Position befindet.

3. Dachstrebe nach Anspruch 1 oder 2, wobei das lang gestreckte Lasttrageelement (13, 113) den Querstrebenabschnitt (15, 115) und zwei Endabschnitte (16, 116) aufweist, wovon jeweils einer an einem Ende des Querstrebenabschnitts (15, 115) befestigt ist, wobei zwei Stützen (14, 114) vorhanden sind, wovon jede an einem entsprechenden der zwei Endabschnitte (16, 116) durch einen jeweiligen Verriegelungsmechanismus (20, 120) verriegelbar ist.

4. Dachstrebe nach Anspruch 3, wobei die zwei Verriegelungsmechanismen (20, 120) miteinander verbunden sind, so dass sie im Gleichklang arbeiten, um die Freigabe der beiden Verriegelungsmechanismen (20, 120) von einem Ende der Dachstrebe (10, 110) zu erleichtern.

5. Dachstrebe nach Anspruch 3 oder nach Anspruch 4, wobei jede der Stützen (14, 114) mit dem entsprechenden Endabschnitt (16, 116) durch ein Steuergestänge (25, 125) verbunden ist, das verwendet wird, um die Bewegung des lang gestreckten Lasttrageelements (13, 113) und der Stütze (14, 114) zu steuern, wenn die Dachstrebe (10, 110) zwischen ihrer ausgeklappten Position und ihrer verstauten Position hin und her bewegt wird.

6. Dachstrebe nach Anspruch 5, wobei das Steuergestänge (25) an jedem Ende einen jeweiligen U-förmigen Endabschnitt besitzt, wobei jeder der U-förmigen Endabschnitte einen ersten Arm, der an einem entsprechenden Endabschnitt (16) angelenkt in Eingriff ist, und einen zweiten Arm, der an der jeweiligen Stütze (14) am selben Ende der Dachstrebe (10) angelenkt ist, besitzt.

7. Dachstrebe nach Anspruch 5 oder Anspruch 6, wobei dann, wenn die Verriegelungsmittel (20, 120) freigegeben sind, jedes Steuergestänge (25, 125) in Kombination mit dem jeweiligen Endabschnitt (16, 116), der jeweiligen Stütze (14, 114) und einer jeweiligen Basisplatte (11, 111) ein Vierstreben-Gestänge bildet.

8. Dachstrebe nach einem der Ansprüche 5 bis 7, wobei jedes Steuergestänge (125) eine Arretierung (126) besitzt, die einen Teil eines entsprechenden Verriegelungsmechanismus (128) bildet, der daran befestigt ist, und das Steuergestänge (125) in Querrichtung beweglich ist, um den Eingriff der Arretierung (126) in einer Öffnung (117) in einer Wand einer entsprechenden Stütze (114) zu lösen, um so den Verriegelungsmechanismus (120) zu lösen.

9. Dachstrebe nach Anspruch 8, wobei jedes Steuergestänge (125) mit einem Ende an einer Stange (123) befestigt ist, die verwendet wird, um die beiden Verriegelungsmechanismen (120) zu verbinden, und mit einem gegenüberliegenden Ende an einer der beiden Stützen (114) angelenkt ist, wobei eine longitudinale Verlagerung der Stange (123) durch einen Anwender des Fahrzeugs (1) bewirkt, gleichzeitig beide Verriegelungsmechanismen (120) freizugeben, und wobei eine Drehbewegung der Stange (123) das Zusammenklappen der Dachstrebe (110) erleichtert.

10. Dachstrebe nach einem der Ansprüche 3 bis 9, wobei die Dachstrebe (10, 110) dazu ausgelegt ist, in der Weise zusammengeklappt zu werden, dass die Endabschnitte (16, 116) des lang gestreckten Lasttrageelements (13, 113) über den Stützen (14, 114) zusammengeklappt werden, ohne die Stapelhöhe der verstauten Dachstrebe (10, 110) zu erhöhen.

11. Dachstrebe nach einem der Ansprüche 3 bis 10, wobei jeder Endabschnitt (116) im Querschnitt U-förmig ist und ein Innenvolumen definiert, in dem eine jeweilige Stütze (114) verstaut ist, wenn die Dachstrebe (110) in dem verstauten Zustand ist.

12. Dachstrebe nach einem der Ansprüche 1 bis 11, wobei das Dach (5) des Kraftfahrzeugs (1) einen hohen Punkt und einen unteren Punkt besitzt und wobei dann, wenn die Dachstrebe (10, 110) in ihrem verstauten Zustand bewegt ist, kein Teil der verstauten Dachstrebe (10, 110) höher ist als der hohe Punkt des Dachs (5), so dass die Gesamthöhe des Kraftfahrzeugs (1) durch die verstaute Dachstrebe (10, 110) nicht erhöht ist, und sich kein Teil der Dachstrebe (10, 110) unter dem unteren Punkt des Dachs (5) befindet.

13. Kraftfahrzeug (1), das ein Dach (5) und wenigstens zwei Dachstreben (10, 110) nach einem der Ansprüche 1 bis 12 besitzt, die am Dach (5) des Kraftfahrzeugs (1) in einer beabstandeten Beziehung befestigt sind.

14. Kraftfahrzeug nach Anspruch 13, wobei das Dach (5) des Kraftfahrzeugs (1) einen hohen Punkt besitzt und, wenn die Dachstreben (10, 110), die am Dach (5) des Fahrzeugs (1) befestigt sind, in ihre jeweiligen verstauten Zustände bewegt sind, kein Teil der verstauten Dachstreben (10, 110) höher ist als der hohe Punkt des Dachs (5), so dass die Gesamthöhe des Kraftfahrzeugs (1) durch die verstauten Dachstreben (10, 110) nicht erhöht ist, und das Dach (5) einen unteren Punkt besitzt, der einer Höhe entspricht, unterhalb derer eine Oberfläche nicht selbstentwässernd ist, wobei kein Teil jeder Dachstrebe (10, 110) unterhalb des unteren Punkts des Dachs (5) verstaut ist.

15. Kraftfahrzeug nach Anspruch 13, wobei das Dach einen konvexen Mittelabschnitt (7) besitzt, der an jeder Seite durch eine in Längsrichtung verlaufende Regenrinne (9) begrenzt ist, und der untere Punkt des Dachs (5) der Höhe der Regenrinnen (9) entspricht und der Mittelabschnitt (7) des Dachs (5) eine Anzahl von Kanälen (8) mit offenem Ende besitzt, die in ihm ausgebildet sind, um die verstauten Dachstreben aufzunehmen, wobei jeder der Kanäle (8) eine Basisoberfläche (8b) besitzt, die nicht niedriger ist als die Höhe der Regenrinnen (9), um sicherzustellen, dass sie selbstentwässernd ist, und jede Dachstrebe (10, 110) in einem entsprechenden der Kanäle (8) verstaut ist.

## Revendications

1. Barre de toit (10, 110) escamotable pour un véhicule automobile (1), comprenant un organe de support de charge allongé (13, 113) s'étendant en travers du véhicule (1) et connecté de manière pivotante à un toit (5) du véhicule (1) de manière à pouvoir être déplacé entre des positions escamotée et déployée et un mécanisme de verrouillage (20, 120) pour retenir de manière sélective l'organe de support de charge allongé (13, 113) dans la position déployée dans laquelle une portion de traverse (15, 115) de l'organe de support de charge allongé (13, 113) est espacée au-dessus du toit (5) du véhicule (1), **caractérisée en ce que** la largeur (w) de la portion de traverse (15, 115) est supérieure à l'épaisseur (t) de la portion de traverse (15, 115) et la portion de traverse (15, 115) est ré-orientée par le déplacement de l'organe de support de charge allongé (13, 113) depuis la position escamotée dans la position déployée, de manière à augmenter la résistance verticale à la flexion de la portion de traverse (15, 115).

2. Barre de toit escamotable selon la revendication 1, dans laquelle la portion de traverse (15, 115) est orientée de telle sorte que la largeur (w) de la portion de traverse (15, 115) soit arrangée verticalement lorsque l'organe de support de charge allongé (13, 113) est dans la position déployée et l'épaisseur (t) de la portion de traverse (15, 115) est arrangée verticalement lorsque l'organe de support de charge allongé (13, 113) est dans la position escamotée.

3. Barre de toit selon la revendication 1 ou 2, dans laquelle l'organe de support de charge allongé (13, 113) est constitué de la portion de traverse (15, 115) et de deux portions d'extrémité (16, 116), chacune étant attachée à chaque extrémité de la portion de traverse (15, 115) et deux supports (14, 114) étant prévus, chacun pouvant être verrouillé à l'une respective des deux portions d'extrémité (16, 116) par un mécanisme de verrouillage respectif (20, 120).

4. Barre de toit selon la revendication 3, dans laquelle les deux mécanismes de verrouillage (20, 120) sont reliés l'un à l'autre de telle sorte qu'ils travaillent conjointement de manière à faciliter la libération des deux mécanismes de verrouillage (20, 120) d'une extrémité de la barre de toit (10, 110).

5. Barre de toit selon la revendication 3 ou 4, dans laquelle chacun des supports (14, 114) est connecté à la portion d'extrémité correspondante (16, 116) par une liaison de commande (25, 125) utilisée pour commander le mouvement de l'organe de support de charge allongé (13, 113) et du support (14, 114) lorsque la barre de toit (10, 110) est déplacée de manière réversible entre ses positions déployée et escamotée.

6. Barre de toit selon la revendication 5, dans laquelle la liaison de commande (25) a une portion d'extrémité respective en forme de U à chaque extrémité, chacune des portions d'extrémité en forme de U ayant un premier bras s'engageant par pivotement avec une portion d'extrémité respective (16) et un deuxième bras connecté par pivotement au support respectif (14) sur la même extrémité de la barre de toit (10).

7. Barre de toit selon la revendication 5 ou 6, dans laquelle, lorsque les moyens de verrouillage (20, 120) sont libérés, chaque liaison de commande (25, 125) forme, conjointement avec la portion d'extrémité respective (16, 116), le support respectif (14, 114) et une plaque de base respective (11, 111), une tringlerie à quatre barres.

8. Barre de toit selon l'une quelconque des revendications 5 à 7, dans laquelle chaque liaison de commande (125) a un cliquet (126) faisant partie d'un mécanisme de verrouillage correspondant (128) fixé sur celle-ci, et la liaison de commande (125) peut être déplacée transversalement de manière à désengager le cliquet (126) d'une ouverture (117) dans une paroi d'un support correspondant (114) de manière à libérer le mécanisme de verrouillage (120).

9. Barre de toit selon la revendication 8, dans laquelle chaque liaison de commande (125) est attachée à une extrémité à une tige (123) utilisée pour relier les deux mécanismes de verrouillage (120) et est connectée de manière pivotante à une extrémité opposée à l'un des deux supports (114), un déplacement longitudinal de la tige (123) par un utilisateur du véhicule (1) pouvant être utilisé pour libérer simultanément les deux mécanismes de verrouillage (120), le mouvement de rotation de la tige (123) facilitant le repliement de la barre de toit (110).

10. Barre de toit selon l'une quelconque des revendications 3 à 9, dans laquelle la barre de toit (10, 110) est agencée de manière à se replier de telle sorte que les portions d'extrémité (16, 116) de l'organe de support de charge allongé (13, 113) se replient par-dessus les supports (14, 114) sans augmenter la hauteur empilée de la barre de toit escamotée (10, 110).

11. Barre de toit selon l'une quelconque des revendications 3 à 10, dans laquelle chaque portion d'extrémité (116) a une section transversale en forme de U et définit un volume interne dans lequel un support respectif (114) est escamoté lorsque la barre de toit (110) est dans l'état escamoté.

12. Barre de toit selon l'une quelconque des revendications 1 à 11, dans laquelle le toit (5) du véhicule automobile (1) a un point haut et un point bas, et lorsque la barre de toit (10, 110) est déplacée dans sont état escamoté, aucune partie de la barre de toit escamotée (10, 110) n'est disposée plus haut que le point haut du toit (5), de sorte que la hauteur globale du véhicule automobile (1) ne soit pas accrue par la barre de toit escamotée (10, 110) et qu'aucune partie de la barre de toit (10, 110) ne soit située plus bas que le point bas sur le toit (5).

13. Véhicule automobile (1) ayant un toit (5) et au moins deux barres de toit (10, 110) selon l'une quelconque des revendications 1 à 12, attachées au toit (5) du véhicule automobile (1) en relation espacée.

14. Véhicule automobile selon la revendication 13, dans lequel le toit (5) du véhicule automobile (1) a un point haut et lorsque les barres de toit (10, 110) ajustées sur le toit (5) du véhicule (1) sont déplacées dans leur état escamoté respectif, aucune partie des barres de toit escamotées (10, 110) n'est située plus haut que le point haut du toit (5), de sorte que la hauteur globale du véhicule automobile (1) ne soit pas accrue par les barres de toit escamotées (10, 110) et le toit (5) a un point bas correspondant à une hauteur en dessous de laquelle une surface n'est pas auto-drainante et aucune partie de chaque barre de toit (10, 110) n'est escamotée plus bas que le point bas du toit (5).

15. Véhicule automobile selon la revendication 13, dans lequel le toit a une portion centrale convexe (7) bordée de chaque côté par une rigole de drainage s'étendant longitudinalement (9) et le point bas du toit (5) correspond à la hauteur des rigoles de drainage (9) et la portion centrale (7) du toit (5) présente un certain nombre de canaux à extrémités ouvertes (8) formés dans celui-ci pour recevoir les barres de toit escamotées, chacun des canaux (8) ayant une surface de base (8b) située pas plus bas que la hauteur des rigoles de drainage (9) de manière à garantir qu'elle soit auto-drainante et que chaque barre de toit (10, 110) soit escamotée dans l'un respectif des canaux (8).
